Europäisches Patentamt

European Patent Office

Office européen des brevets

(19)

(11) Numéro de publication: **0 286 764**

**A1**

## (12) DEMANDE DE BREVET EUROPEEN

(21) Numéro de dépôt: 87450006.9

(22) Date de dépôt: 03.04.87

(51) Int. Cl.4: **B62D 53/06** , **B62D 55/06** , **E04B 1/343**

(43) Date de publication de la demande:
19.10.88 Bulletin 88/42

(84) Etats contractants désignés:
AT BE CH DE ES FR GB GR IT LI LU NL SE

(71) Demandeur: Malie, Louis
Route de Lavaur B.P. 47
F-81304 GRAULHET CEDEX(FR)

(72) Inventeur: Malie, Louis
Route de Lavaur B.P. 47
F-81304 GRAULHET CEDEX(FR)

(74) Mandataire: Ravina, Bernard
Cabinet Bernard RAVINA 24, boulevard
Riquet
F-31000 Toulouse(FR)

(54) Ensemble de transport de maisons préfabriquées, maison préfabriquée dotée d'aménagements pour son transport et procédé de fabrication d'une telle maison.

(57) L'ensemble de transport comprend un premier moyen de transport (1) du type semi remorque doté d'une structure porteuse constituée par un châssis avant d'ancrage au véhicule tracteur, par un châssis arrière et par deux poutres (3) déplaçables latéralement, par des organes (7) pour venir enserrer la maison et pour venir engager des broches (3) qu'elles portent dans des orifices ménagés dans la dalle de la maison. Le second moyen de transport est un engin à chenillette comportant un plateau supérieur orientable dans un plan horizontal, le dit plateau étant destiné à recevoir la maison.

Le procédé de fabrication de bâtiment de petites dimensions à partir de composants préfabriqués consiste à ériger des panneaux préfabriqués constituant les murs extérieurs, à couler dans l'espace qu'ils délimitent une chape en béton et à fixer aux dits panneaux des seconds panneaux constituant les cloisons internes et à poser une toiture préfabriquée. Les composants préfabriqués de panneau (1) sont dotés en partie inférieure d'au moins un orifice transversal (7) dans lequel est engagé l'extrémité d'un élément tubulaire (8) métallique mis en place avant coulage de la chape (3), le dit élément coopérant par la suite avec un moyen de levage de la maison.

FIGURE 1

# ENSEMBLE DE TRANSPORT DE MAISONS PREFABRIQUEES, MAISON PREFABRIQUEE DOTEE D'AMENAGEMENTS POUR SON TRANSPORT ET PROCEDE DE FABRICATION D'UNE TELLE MAISON.

La présente invention a pour objet un ensemble de transport de maisons préfabriquées, maison préfabriquée dotée d'aménagements pour son transport et un procédé de fabrication d'une telle maison.

La tendance actuelle est la préfabrication en usine de maisons entièrement équipées.

Ces maisons sont par la suite transportées sur leur lieu d'implantation et sont habitables très peu de temps après leur pose. Cette technique offre l'avantage de ne déplacer, sur le lieu d'implantation qu'un personnel réduit qui assure la construction de l'assise et raccorde les aménagements internes de la maison aux réseaux collecteurs et distributeurs.  ·

Pour qu'une telle technique soit viable il est nécessaire que le transport de la maison face appel à des moyens peu couteux et légers. De plus il est nécessaire que l'ensemble, transporteur et maison transportée, soit au gabarit routier.

Actuellement les maisons préfabriquées en usine sont transportées sur leur site d'implantation au moyen d'engins routiers du type semi-remorque à plateau sur-abaissé par rapport au point d'attache au véhicule tracteur.

Ce type de transporteur en raison de son encombrement ne peut être utilisé pour amener des maisons sur un lieu d'implantation enclavé. De plus en raison de son poids, ce transporteur ne peut être amené sur des terrains meubles.

Il est à noter enfin que le plateau de ce type d'engin de transport est à environ 80 cm au dessus du sol. La hauteur de la maison susceptible d'être transportée est donc limitée à 4,5 mètres.

Pour faciliter le transport de la maison entre le lieu de fabrication et le lieu d'implantation, il est apparu utile de concevoir un ensemble de transport qui offre l'avantage de pouvoir amener de telles maisons sur des lieux d'implantation enclavés et ou à sol meuble.

Il est apparu également utile de concevoir un ensemble de transport apte à transporter des maisons de plus grandes hauteurs.

Il est apparu de même utile en liaison avec l'ensemble de transport de concevoir un procédé de fabrication permettant de réaliser celles-ci sur un seul site, en atelier, et de les transporter sur le lieu d'implantation.

Pour parvenir à ces différents buts, l'ensemble de transport est constitué par un premier moyen de transport de la maison entre le lieu de fabrication et un lieu situé à proximité du site d'implantation et un second moyen de transport de faible gabarit apte à transporter la maison vers son site d'implantation.

L'ensemble de transport pour le transport de maisons préfabriquées depuis le lieu de préfabrication vers le site d'implantation, comprenant un premier moyen de transport du genre semi-remorque, et un second moyen de transport de faible gabarit; le dit moyen de transport étant constitué par une structure por teuse attelée à un véhicule tracteur se caractérise essentiellement en ce que la structure porteuse, destinée à recevoir la maison à transporter, est constituée par un premier châssis 4 ou châssis avant comportant des organes d'attelage au véhicule tracteur par un second châssis 5 ou châssis arrière comportant un train de roulement, par au moins deux poutres horizontales 3 parallèles au sens d'avancement du véhicule tracteur, coopérant chacune en coulissement latéral avec le premier et le second châssis et dotée chacune d'organes de support 6 de la maison à transporter, et par des organes moteurs 7 fixés aux dites poutres et aux dits châssis pour rapprocher ces dernières l'une de l'autre en sorte qu'elles viennent enserrrer la maison et que leurs organes de support 6 soient engagés dans et/ou sous la dite maison, ou pour écarter les dites poutres l'une de l'autre de manière à libérer la maison.

Selon une autre caractéristique de l'invention le second moyen de transport est constitué par un engin à chenillette 28 doté d'un plateau supérieur 29, horizontal orientable dans le plan horizontal sur lequel est posée la maison.

Selon une autre caractéristique le châssis arrière du premier moyen de transport est amovible et les poutres 3 sont équipées chacunes. en extrémité arrière. d'une béquille 24 dotée d'un organe de roulement 25.

Le procédé de fabrication de bâtiments de petites dimensions selon l'invention à partir de composants préfabriqués, se caractérise essentiellement en ce qu'il consiste à ériger en usine des panneaux préfabriqués constituant les murs extérieurs du bâtiment, à assembler ces différents panneaux les uns aux autres, à couler, après mise en place d'une armature dans l'espace délimité par les panneaux une chape en béton, à fixer aux panneaux constituant les murs extérieurs, des seconds panneaux constituant les cloisons internes, puis dans une étape finale à poser les éléments de toiture.

Il est bien évident que par la suite, le bâtiment reçoit tous les équipements nécessaires pour le rendre propre à l'habitation.

Ce procédé de fabrication présente l'avantage de concentrer sur une unité de fabrication tout le personnel nécessaire à la construction des bâtiments et d'utiliser ce personnel également pour la préfabrication des composants nécessaires.

De plus, avec un tel procédé, la construction d'un bâtiment est réalisée à l'abri des intempéries.

Selon une autre caractéristique, le procédé selon l'invention consiste au préalable à l'opération de coulage de la chape, à revêtir la dalle sur laquelle est coulée la dite chape d'une interface par exemple une couche d'un liquide visqueux pour permettre par la suite le retrait de la maison.

D'autres avantages et caractéristiques de l'invention apparaitront à la lecture de la description d'une forme préférentielle de réalisation, donnée à titre d'exemple non limitatif en se référant aux dessins annexés en lesquels :

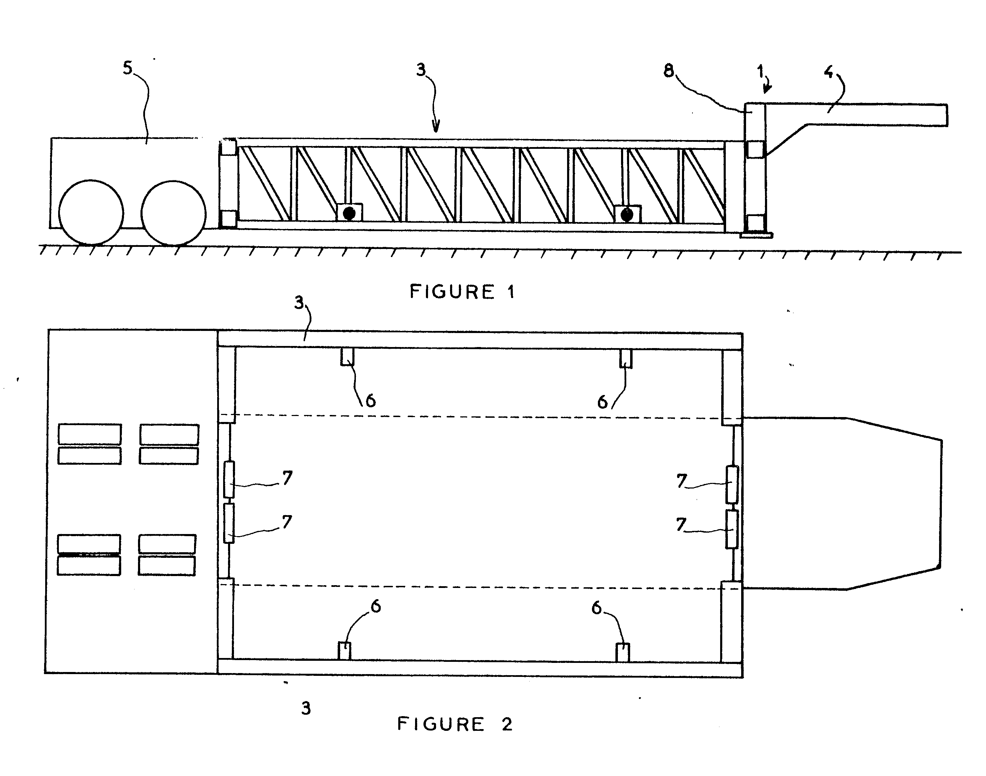

- la figure 1 est une vue en coupe longitudinale du premier moyen de transport,

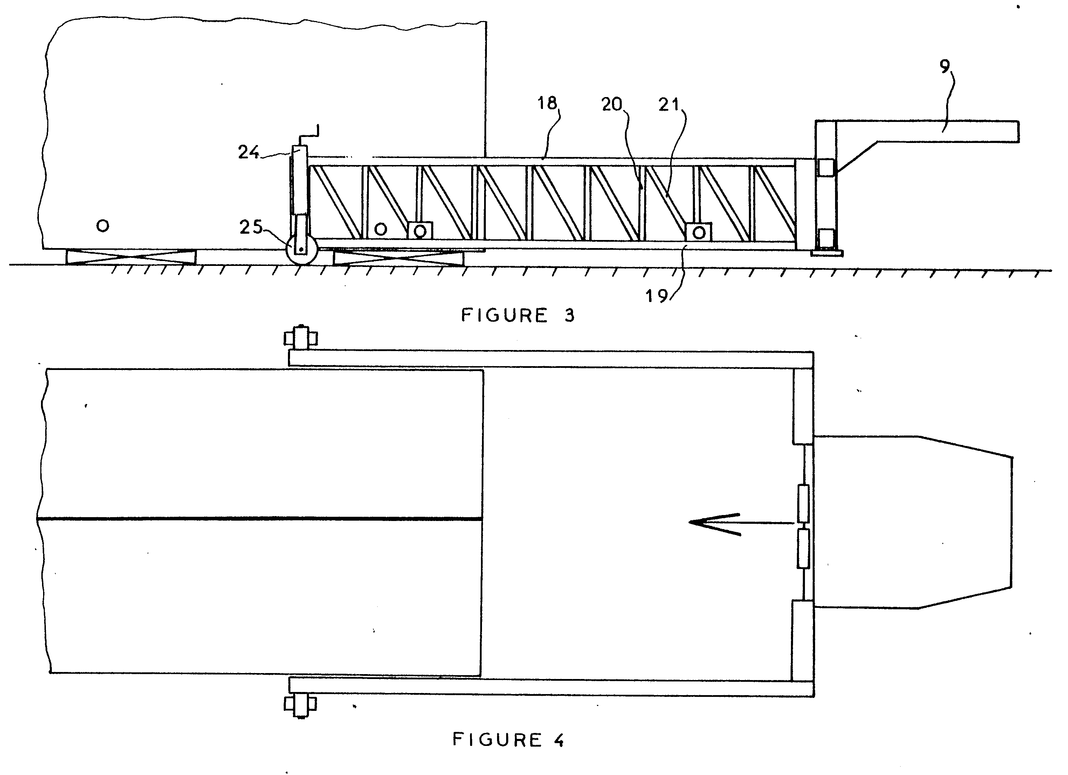

- la figure 2 est une vue de dessus du premier moyen de trans port,

- les figures 3 et 4 montrent les phases d'introduction de la maison dans le premier moyen de tranport.

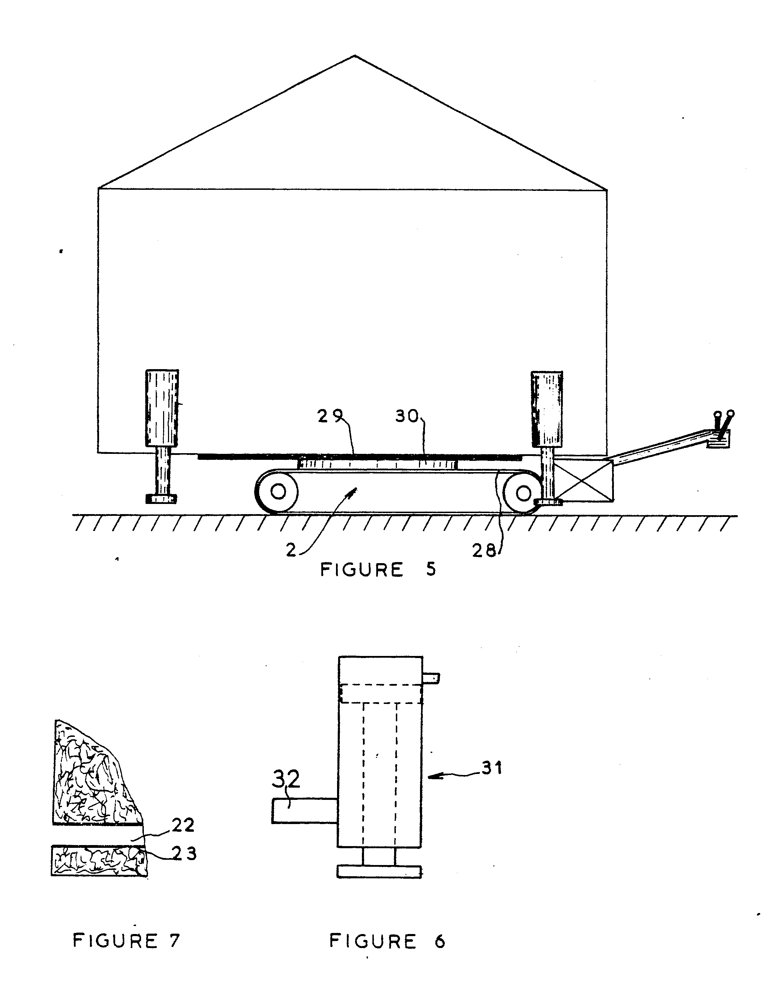

- la figure 5 est une vue de face de la maison portée par le second moyen de transport,

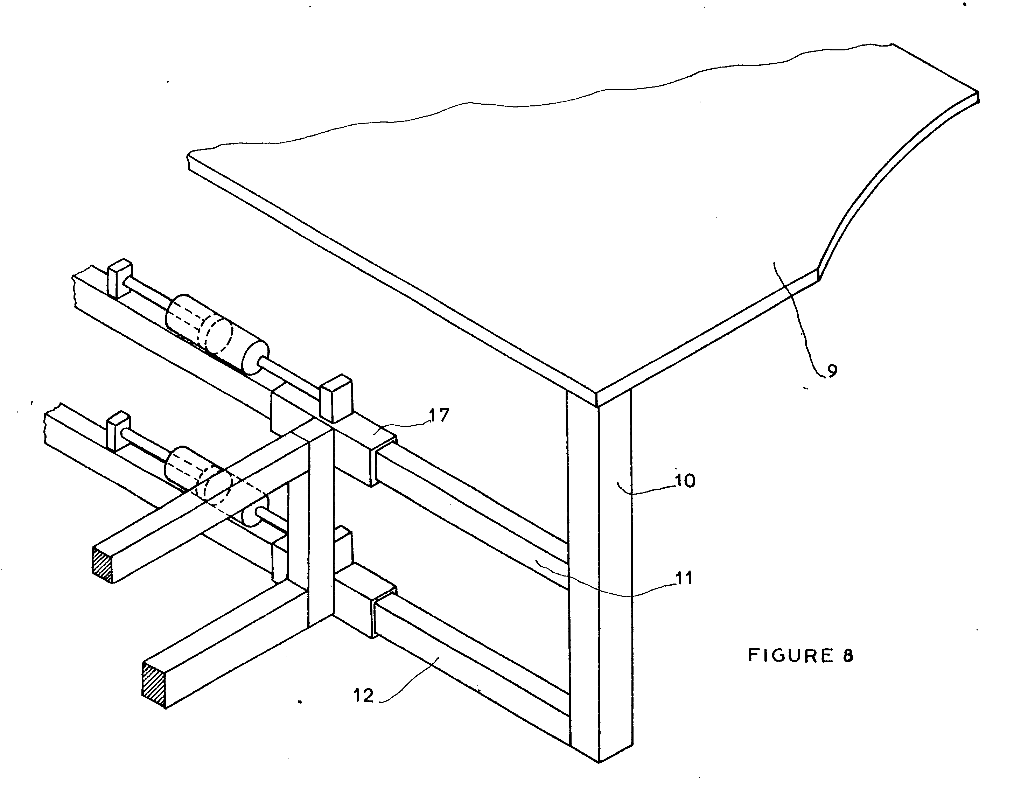

- la figure 6 est une vue du vérin de levage utilisé pour soulever la maison,

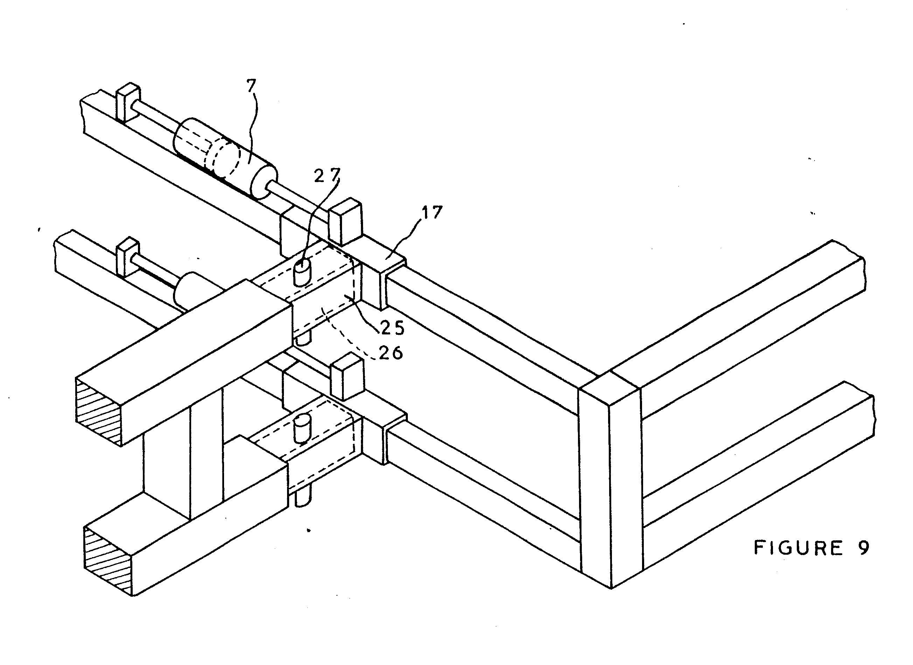

- la figure 7 est une vue de détail de la maison montrant les aménagements de cette dernière pour le transport,

- la figure 8 est une vue partielle en perspective de la partie avant de la structure support,

- la figure 9 est une vue partielle en perspective de la partie arrière de la structure support.

- les figures 10 à 14 représentent le procédé de réalisation d'une maison transportable selon l'invention donné à titre d'exemple,

- la figure 15 est une vue de deux panneaux contigus assemblés l'un à l'autre,

- la figure 16 est une vue en coupe partielle du bâtiment,

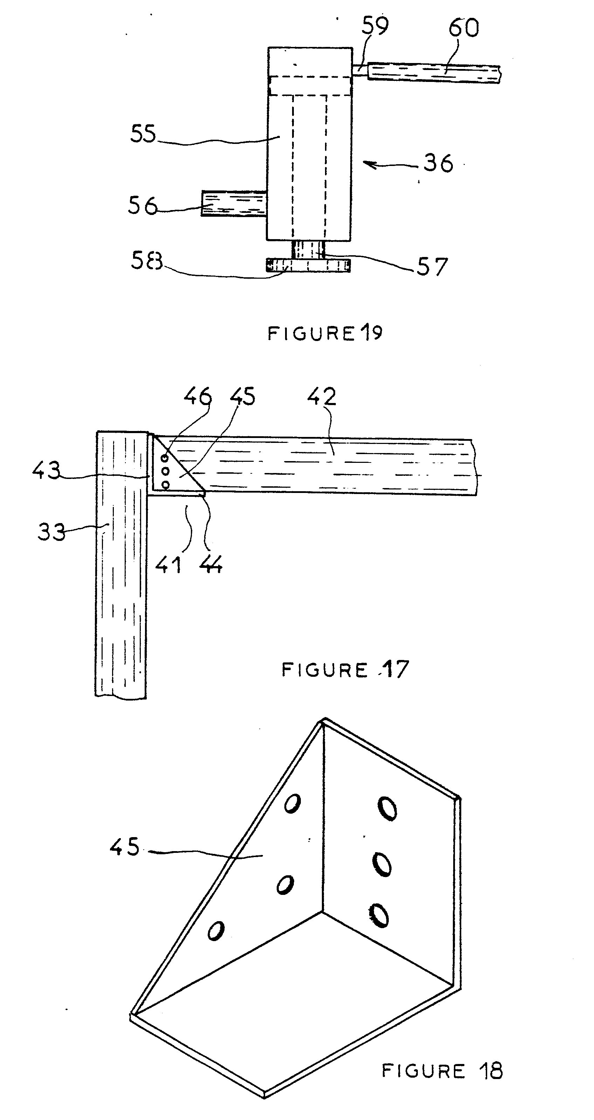

- la figure 17 est une vue montrant l'assemblage d'une poutre à un panneau de mur.

- la figure 18 bis est une vue de détail montrant un élément de soutènement d'une poutre,

- la figure 19 est une vue de détail d'un organe de levage.

Tel que représenté l'ensemble de transport, selon l'invention, comprend un premier moyen de transport 1 du genre semi-remorque et un second moyen de transport 2 de faible gabarit.

Le premier moyen de transport est utilisé pour transporter la maison, depuis son lieu de préfabrication, à proximité du site d'implantation, tandis que le second moyen de transport est utilisé pour amener la maison sur son lieu d'implantation.

Le premier moyen de transport 1 comprend un engin tracteur auquel est attelé une structure porteuse recevant la maison à transporter.

Cette structure porteuse est constituée par un châssis 4 ou châssis avant, comportant des organes d'attelage au véhicule tracteur, par un second châssis ou châssis arrière 5 comportant un train de roulement, par au moins deux poutres horizontales 3, parallèles au sens d'avancement du véhicule tracteur coopérant chacune en coulissement latéral avec le premier et second châssis et dotée chacune d'organes de support 6 de la maison à transporter, et par des organes moteurs 7 fixés aux dites poutres et aux dits châssis pour rapprocher les dites poutres 3 l'une de l'autre en sorte qu'elles enserrent la maison et que les organes de support 6 soient engagés dans et/ou sous cette dernière et pour écarter les dites poutres l'une de l'autre de manière à libérer la maison.

Le premier châssis 4 ou châssis avant comprend un cadre 8 vertical transversal au sens d'avancement du véhicule tracteur et un plateau horizontal 9 qui coopère en articulation avec le siège du véhicule tracteur.

Le cadre 8 du châssis avant est constitué par deux montants métalliques 10 verticaux réunis en extrémité supérieure par le plateau d'ancrage 9 au véhicule tracteur. Les deux montants sont réunis en outre l'un à l'autre par deux traverses horizontales métalliques, une traverse médiane 11 et une traverse inférieure 12.

Le second châssis arrière comprend également un cadre vertical 13 transversal au sens d'avancement du moyen de transport, formé par l'assemblage de deux montants verticaux 14 réunis par une traverse horizontale supérieure 15 et par une traverse inférieure horizontale 16.

Les poutres 3 de la structure porteuse coopèrent chacune par leur extrémité en coulissement latéral avec les traverses du premier et second châssis.

A cet effet chaque poutre 3 à chaque extrémité comporte deux fourreaux 17 parallèles, superposés, perpendiculaires à l'axe longitudinal de la dite poutre, qui sont chacun engagés en coulissement sur la traverse correspondante.

Chaque extrémité de la poutre coopère avec au moins un organe moteur 7.

Cet organe moteur constitué de préférence par un vérin hydraulique est fixé par sa tige fixée à un des fourreaux de la poutre et par son corps à une chape fixée sur la traverse engagée dans le dit fourreau.

Ces deux organes moteurs ou vérins hydrauliques sont connectés à un circuit hydraulique comportant au moins un distributeur hydraulique actionnable manuellement qui dirige le flux hydraulique, soit dans la chambre arrière de chaque vérin, soit dans la chambre avant de manière à rapprocher chaque poutre de l'autre ou au contraire l'en écarter.

De préférence, l'extrémité de chaque poutre coopère avec deux vérins 7, chacun de ces vérins étant fixé par sa tige sur un fourreau 17.

Avantageusement, les vérins de chaque extrémité de la poutre sont équilibrés hydraustatiquement.

Selon une forme préférentielle de réalisation, chaque poutre 3 est constitué par deux longerons parallèles, horizontaux, un longeron supérieur 18 et un longeron inférieur 19, réunis l'un à l'autre à chaque extrémité par un montant vertical. Par ailleurs, ces deux longerons sont réunis par des entretoises verticales 20 et par des entretoises obliques de manière à former un ensemble en treillis.

La zone inférieure de chaque poutre 3 est équipée des organes de support 6, ces dits organes étant de préférence fixés au longeron inférieur 13.

De cette manière la maison lors de son transport est portée à une faible distance du sol.

Cette disposition permet de transporter des maisons plus hautes sans que pour autant que l'ensemble, maison transportée et transporteur soit hors gabarit.

Selon une forme préférentielle de réalisation, les organes de support 6 de la maison sont constitués chacun par une broche encastrée par une de ses extrémité dans le longeron inférieur de la poutre correspondante, la dite broche étant en saillie vers l'autre poutre et se développant de manière perpendiculaire par rapport à son longeron.

Chaque poutre 3 est équipée de deux broches 6 qui sont chacune axialement alignées avec une des broches de l'autre poutre. Pour recevoir les broches, la dalle constituant le sol de la maison, est percée d'orifices horizontaux.

De préférence la dalle constituant le sol de la maison et/ou le bas des panneaux constituant les murs est ou sont équipés d'orifices 22 renforcés par des éléments tubulaires 23 horizontaux, métalliques. Ces éléments tubulaires sont noyés dans le béton de la dalle et/ou des panneaux et affleurent les faces latérales de la dalle et/ou affleurent la partie inférieure des faces extérieures des panneaux.

Selon une autre forme de réalisation, les organes support sont constitués par des platines métalliques, horizontales fixées contre le longeron inférieur. Ces platines sont destinées à être engagées sous la dalle constituant le sol de la maison.

Selon encore une autre forme de réalisation, chaque poutre 3 est équipée d'organes de support dont certains sont constitués par des broches et dont les autres sont constitués par des platines.

Pour faciliter le chargement ou le déchargement de la maison de la structure support, le châssis arrière 5 de la dite structure est amovible tandis que l'extrémité arrière de chaque poutre 3 est équipée d'une béquille escamotable 24 terminée par un organe de roulement 25.

Ainsi après mise en appui des béquilles escamotables sur le sol, et retrait du châssis arrière la structure support, suivant un mouvement de recul peut être engagée autour d'une maison à transporter maintenue au dessus par des cales. Par la suite après mise en place du châssis arrière et retrait des béquilles, les poutres 3 par l'intermédiaire des organes moteurs sont amenés en pression contre la maison tandis que leurs organes de support sont engagés dans les orifices de la dalle.

Pour retirer la maison de la structure support, l'opération inverse est pratiquée.

Selon la forme préférée de réalisation les fourreaux 17 qui coopèrent avec les traverses supérieures et inférieures du cadre du châssis arrière reçoivent chacun en fixation un manchon horizontal 25 parallèle à l'axe d'avancement du transporteur et l'extrémité arrière de chaque poutre est équipée de deux broches 26 horizontales destinées à s'engager et à se verrouiller dans le manchon correspondant.

Les broches 26 prolongent axialement vers l'arrière les longerons de la poutre.

Pour verrouiller la broche dans le manchon, il est prévu une ou plusieurs goupilles 27 amovibles qui sont destinées à être engagées dans des orifices transversaux pratiqués dans le manchon 25 et dans la broche 26.

Il est bien évident que tout autre mode de verrouillage pourra être utilisé.

Les béquilles escamotables 24 sont chacune fixées sur les poutres 3.

Selon l'exemple préférentiel de réalisation, chaque béquille comprend un fourreau vertical fixé par tous moyens connus aux longerons de la poutre correspondante et un système à vis et écrou qui actionne un pied vertical monté en coulissement dans le fourreau.

Ce pied vertical est terminé par une chape qui reçoit l'organe de roulement.

De préférence le fourreau et le pied présentent tous deux une section transversale polygonale pour éviter la rotation du dit pied par rapport au dit fourreau.

La vis du système vis et écrou est bloquée en translation dans le fourreau.

Cette vis en extrémité supérieure est équipée d'une manivelle. En extrémité inférieure, la vis est engagée dans un taraudage axial pratiqué dans le pied.

On conçoit que l'action sur la manivelle provoque le mouvement de descente du pied ou le mouvement de montée suivant le sens de rotation.

Le second moyen de transport 2 est un engin de faible gabarit comportant des chenillettes 28, et un plateau supérieur 29 horizontal destiné à recevoir la maison.

Les chenillettes du second moyen de transport sont associées mécaniquement à un moteur thermique par l'intermédiaire d'une transmission appropriée comportant notamment une boite à vitesse.

Le second moyen de transport est équipé d'une poignée en extré mité libre de laquelle est monté un tableau de bord comportant différentes commandes.

Aprés calage de la maison en hauteur et retrait du premier moyen de transport, le second moyen de transport est engagé sous la maison. Ce second moyen de transport peut alors amener la maison sur son site d'implantation.

Pour faciliter la mise en place de la maison par exemple sur des plots préalablement érigés, le plateau supérieur du second moyen de transport est orientable dans un plan horizontal.

A cet effet, le plateau 29 est porté par un pivot vertical mobile en rotation autour d'un axe vertical.

Ce pivot est relié, par l'intermédiaire d'une transmission appropriée à un organe moteur.

Cet organe moteur est commandé à partir d'organes de commande monté sur le tableau de bord du second moyen de transport.

Pour dégager la maison du second moyen de transport, il est prévu des organes de piètement amovibles dont le rôle est de soulever la maison pour la décoler du plateau 29.

Ces organes de piètement sont latéraux à la maison et sont par exemple constitués chacun par un vérin hydraulique dont le corps comporte un doigt radial 32 destiné à être engagé dans l'orifice 22 d'un des éléments tubulaires 23 et dont la tige en saillie vers le bas est terminée par une platine d'appui sur le sol.

On conçoit également qu'un tel organe 32 est utilisable nota ment pour soulever la maison sur le lieu de fabrication pour disposer des cales sous la dalle de la dite maison.

De tels organes sont également utilisables pour maintenir la maison à écartement du sol lors de l'engagement sous cette dernière du second moyen de transport.

De plus il est intéressant de noter que les organes 31 peuvent être maintenus en place contre la maison lors du transport de cette dernière par le second moyen. De cette manière ces organes s'opposent au basculement accidentel de la maison.

L'ensemble de transport tel que décrit permet le transport à moindre coût d'une maison préfabriquée.

Le procédé de construction de maison transportable qui suit, est donné à titre d'exemple.

Le procédé selon l'invention a pour objet la construction de bâtiments de faibles dimensions à partir de composants préfabriqués notamment à partie de panneaux 33 de murs extérieurs et d'éléments de toiture.

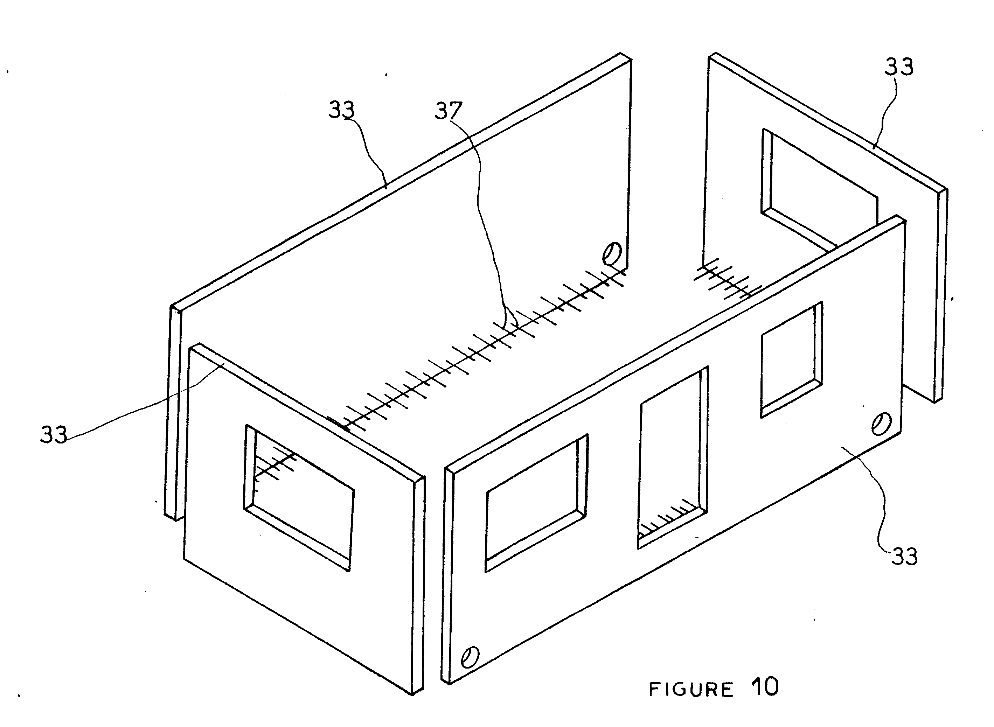

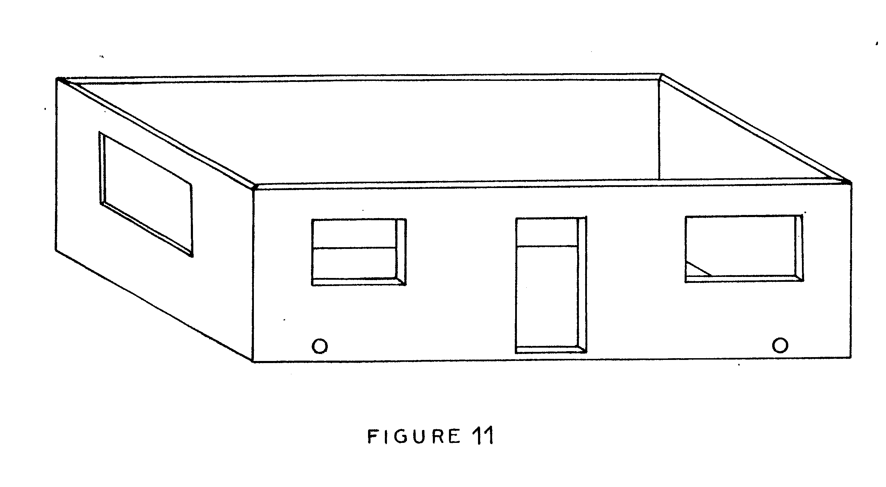

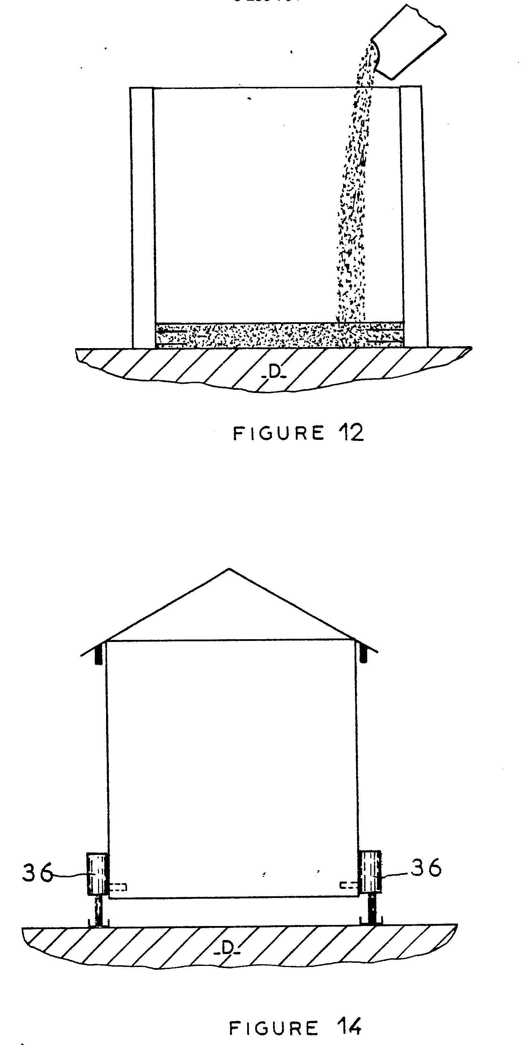

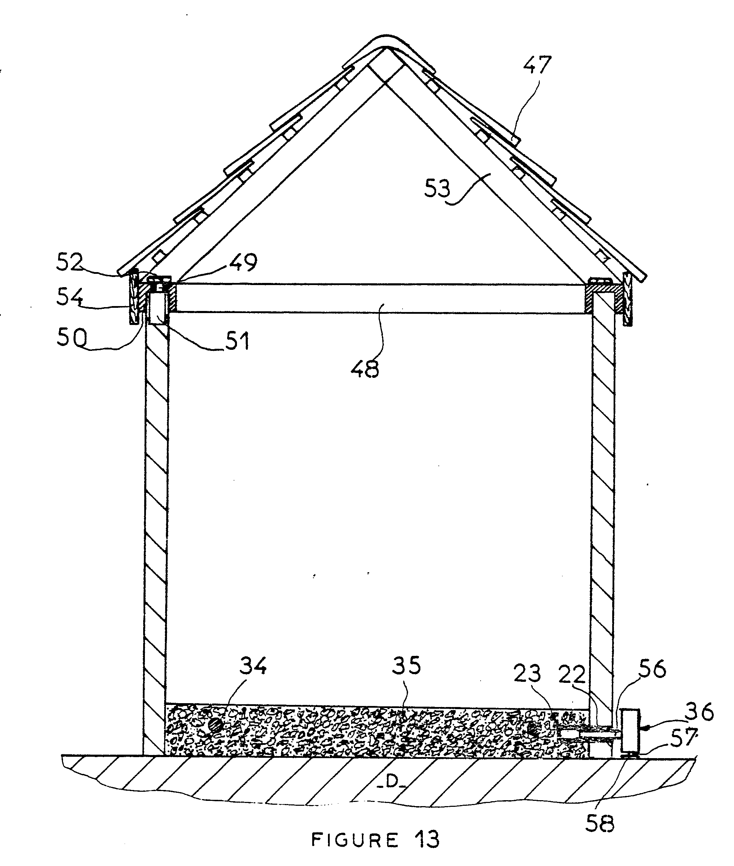

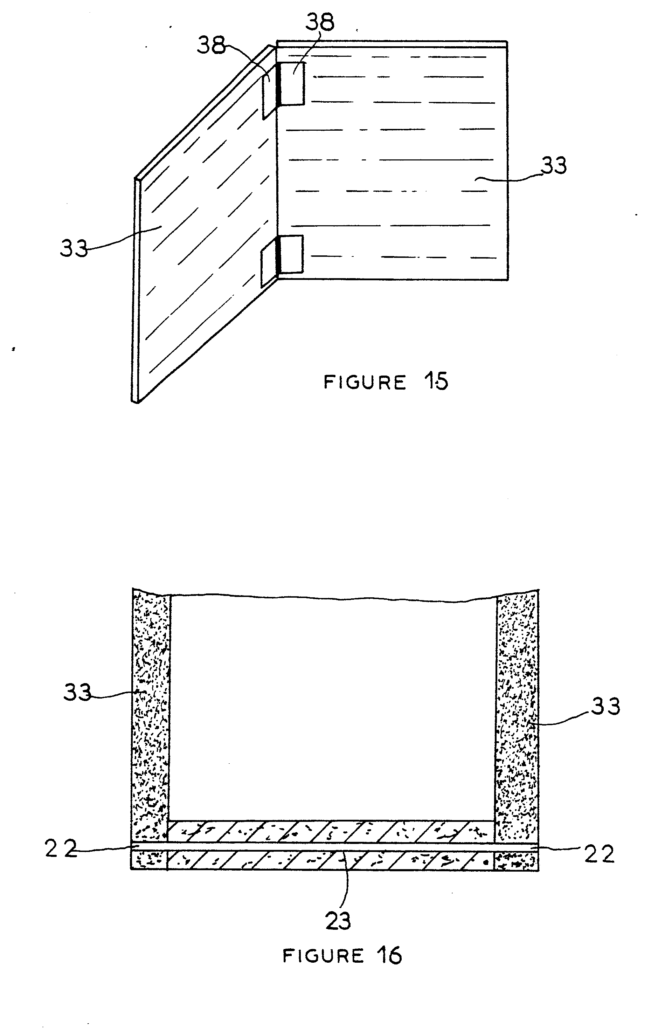

En se reférant aux figures 10 à 14, on va exposer le procédé selon l'invention.

Dans une première étape, le procédé selon l'invention consiste à dresser sur une aire de coulage D les panneaux 33 constituant les murs extérieurs puis à assembler ces panneaux les uns aux autres.

Dans une deuxième étape, il est apposé sur l'aire de coulage D un interface qui peut être un fluide visqueux.

On comprend que seule la partie de l'aire de coulage interne au bâtiment est revêtue de ce fluide visqueux qui peut être par exemple de l'huile de démoulage ou une feuille de papier ou de matière synthétique.

Cette opération a pour but de faciliter ultérieurement l'enlèvement du bâtiment.

Dans une troisième étape, il est procédé à l'introduction et à la mise en place dans le bâtiment de l'armature 34 destinée au rendort de la dalle 35 constituant le sol du dit bâtiment, et à la mise en place des éléments d'ancrage des moyens de levage. Il est à noter que l'armature 34 de la dalle est préfabriquée et est introduite d'un seul bloc dans le bâtiment.

Dans une quatrième étape, il est procédé au coulage du béton de la dalle, cette opération étant effectuée par le haut.

On conçoit que les zones inférieures des panneaux 33 constituent un coffrage.

On conçoit également que le béton de la dalle 35 ne peut adhérer à la surface de l'aire de coulage en raison du fait que celle-ci est revêtue d'un fluide de démoulage ou de tout autre interface.

Après séchage de la dalle, le procédé consiste à disposer et à fixer les panneaux constituant les cloisons et murs internes du bâtiment et monter dans ce bâtiment les équipements nécessaires.

Dans une dernière étape, le procédé consiste à poser sur les murs extérieurs du bâtiment une toiture entièrement préfabriquée ou bien selon une autre forme de réalisation, à poser et à assembler entre eux et aux dits panneaux les composants de la toiture du bâtiment.

Lorsque le bâtiment est terminé, il est procédé à la mise en place de moyen de levage 36 pour décoler le bâtiment de l'aire de coulage D.

Avantageusement, ces moyens de levage sont du même type que ceux précédemment décrits.

Ainsi, ces moyens de levage pourront être constitués par un vérin hydraulique dont le corps 55 est pourvu d'un doigt radial 56 venant s'engager dans l'orifice 22 et dont la tige 57 est terminée par une platine 58 d'appui au sol.

Le corps 55 de ce vérin est pourvu d'un orifice qui débouche dans sa chambre arrière.

Cet orifice est équipé d'un raccord 59 qui est connecté à une conduite hydraulique 60 d'un circuit hydraulique haute pression qui distribue un fluide hydraulique dans la dite chambre pour déplacer le piston et lever la maison.

Les panneaux 33 du mur extérieur sont constitués en béton moulé armé.

Ces panneaux comportant en extrémité inférieure une série de fers en attente 37 horizontaux destinés à être fixés à l'armature 2 de la chape 3 et à être noyés dans le béton de cette dernière.

Chaque panneau comporte des organes d'assemblage ou de blocage 38 à un panneau contigu.

Ces organes d'assemblage sont de préférence fixés sur la face intérieure de chaque panneau à proximité de leur rive verticale.

Selon la forme préférentielle de réalisation, ces organes d'assemblage ou de blocage sont constitués chacun par une platine rectangulaire métallique disposée sur la face intérieure du panneau de manière à ce qu'un de ses bords verticaux viennent au niveau de la rive du panneau.

Ainsi. lors de la juxtaposition de deux panneaux, la platine 38 de l'un vient prolonger la platine de l'autre.

Selon cette forme de réalisation, ces deux platines sont soudées l'une à l'autre pour réaliser l'assemblage des panneaux.

De préférence. chaque platine 38 est montée dans une réservation du panneau de façon à éviter qu'elles soient en saillie sur la face intérieure du dit panneau.

Il est bien évident que tout autre mode ou organe de fixation pourra être utilisé.

En extrémité inférieure, chaque panneau présente un orifice transversal 22 de section droite circulaire qui constitue un point d'ancrage pour les éléments de levage 36 de la maison. Comme dit précédemment, cet orifice est renforcé par un élément tubulaire 23 de renfort pour éviter la détérioration du panneau, au niveau de l'orifice lors de l'opération de levage.

Selon une forme préférée de réalisation. le ou les orifices d'un panneau sont axialement alignés avec les orifices du panneau opposé et les orifices disposés suivant un même axe reçoivent l'extrémité d'un même élément tubulaire mis en place avant ou pendant le coulage de la dalle.

De cette manière, l'élément tubulaire, en courant d'un panneau à l'autre, renforce les caractéristiques mécaniques de la chape.

Chaque panneau est de plus équipé de douilles filetées en attente destinées à la fixation des cloisons internes par exemple ou bien à la fixation des équipements de la construction.

De préférence, les murs du bâtiment sont constitués chacun par un même panneau mais il est bien évident que chaque mur du bâtiment pourra être constitué par la juxtaposition de plusieurs panneaux.

Avantageusement, les dimensions des panneaux constituant les murs extérieurs sont des multiples d'un module de base dont la valeur est par exemple 30 cms.

Il faut noter également que les éléments tubulaires se développent dans la chape du bâtiment transversalement aux murs les plus longs du bâtiment et que ces murs sont équipés des orifices de réception des éléments tubulaires.

L'extrémité supérieure des murs extérieurs du bâtiment reçoit l'ossature de la toiture.

Selon une première forme de réalisation, les panneaux constituant les murs extérieurs sont équipés chacun en extrémité supérieure d'un ou plusieurs sabots 41 d'ancrage des poutres 42 horizontales supportant la charpente.

Ces sabots 41 d'ancrage sont fixés de manière amovible par tous moyens connus en extrémité supérieure des panneaux contre leur face intérieure.

A tire d'exemple, les sabots sont fixés par vissage.

Chaque sabot, de préférence métallique, comporte une paroi d'appui 43 contre la face intérieure du panneau et au moins deux parois perpendiculaires l'une à l'autre et à la paroi d'appui. Une de ces parois, la paroi 44, est horizontale tandis que l'autre, la paroi 45, est verticale.

La paroi horizontale reçoit l'extrémité de la poutre qui se fixe par boulonnage contre la paroi verticale 45.

A cet effet, cette paroi verticale 45 est percée d'au moins deux orifices 46 transversaux, alignés suivant un même axe vertical. Ces orifices transversaux reçoivent les boulons de fixation de la poutre.

Selon une autre variante, les murs extérieurs 1 du bâtiment reçoivent une toiture 47 entièrement préfabriquée.

Cette toiture comporte un cadre métallique horizontal 48 qui vient en appui sur la rive supérieure horizontale des murs extérieurs du bâtiment et recouvrir cette dernière.

De préférence, les longerons et traverses de ce cadre métallique sont constitués par des profilés métalliques comportant une aile horizontale 49 d'appui sur la rive supérieure horizontale du mur extérieur et au moins une aile verticale 50 en saillie vers le bas.

L'aile verticale 50 du cadre métallique vient se disposer, soit à l'extérieur, soit à l'intérieur du bâtiment et a pour rôle d'assurer le calage de la toiture suivant un axe longitudinal et transversal au bâtiment.

Selon une forme préférée de réalisation. les profilés métalliques constituant le cadre d'appui de la toiture comprennent chacun deux ailes verticales en saillie vers le bas raccordées à une âme centrale de manière à ce que leur section droite se présente sous la forme d'un "U" tourné vers le bas.

Lors du montage de la toiture, les profilés du cadre inférieur viennent chevaucher chacun la rive supérieure correspondante.

La toiture préfabriquée est fixée par le cadre à la rive supérieure horizontale de chaque mur extérieur.

A cet effet, l'aile 49 de chaque profilé est percée d'une série d'orifices transversaux qui viennent chacun lors du montage se disposer dans l'axe d'un orifice taraudé pratiqué dans une douille verticale 51 noyée dans le béton du panneau constituant le mur extérieur et affleurant la rive supérieure horizontale de ce panneau.

Pour fixer la toiture aux panneaux, il est prévu des vis 52 engagées chacune dans l'orifice taraudé d'une des douilles au travers de l'orifice de l'âme du profilé.

Le cadre inférieur de la toiture en raison de sa rigidité, assure également le ceinturage de la maison.

Sur la cadre métallique de la toiture sont fixées par tous moyens connus la ou les fermes 53 de la toiture.

Ces fermes sont par exemple constituées par deux jambages inclinés l'un vers l'autre qui portent en extrémité supérieure une poutre de faîtage.

Pour masquer les ailes verticales extérieures aux murs du bâtiment, le cadre de la toiture est équipé de planches de rives 54. Ces planches de rives sont fixées de manière connue aux ailes extérieures du cadre et recouvrent totalement ces dernières.

La toiture préfabriquée comporte un ou plusieurs points de levage fixés par exemple aux éléments de la ferme ou à la poutre faitière.

Pour lever le bâtiment et donc le décoller de la dalle sur lequel il a été construit, il est prévu plusieurs verins de levage 36 équilibrés hydraustatiquement.

Le procédé et les composants tels que décrits sont principalement adaptés à la fabrication de maison d'habitation de petites dimensions aisément transportables par voie routière par l'ensemble de transport objet du présent brevet.

Il va de soi que la présente invention peut recevoir tous aménagements et toutes variantes sans pour autant sortir du cadre du présent brevet.

## Revendications

1. Ensemble de transport pour le transport de maisons préfabriquées depuis le lieu de préfabrication vers le site d'implantation, comprenant un premier moyen de transport du genre semi remorque, et un second moyen de transport de faible gabarit, le dit premier moyen de transport étant constitué par une structure porteuse attelée à un véhioule tracteur caractérisé en ce que la structure porteuse, destinée à recevoir la maison à transporter, est constituée par un premier châssis (4) ou châssis avant comportant des organes d'attelage au véhicule tracteur, par un second châssis (5) ou châssis arrière comportant un train de roulement, par au moins deux poutres horizontales (3) parallèles au sens d'avancement du véhicule tracteur, coopérant chacune en coulissement latéral avec le premier et second châssis et dotée chacune d'organes de support (6) de la maison à transporter, et par des organes moteurs (7) fixés aux dites poutres et aux dits châssis pour rapprocher ces dernières l'une de l'autre en sorte qu'elles viennent enserrer la maison et que leurs organes de support (6) soient engagés dans et/ou sous la dite maison, ou pour écarter les dites poutres l'une de l'autre de manière à libérer la maison.

2. Ensemble de transport selon la revendication 1 caractérisé en ce que le second moyen de transport est constitué par un engin à chenillette (28) doté d'un plateau supérieur (29), horizontal, orientable dans le plan horizontal sur lequel est posé la maison.

3. Ensemble de transport selon la revendication 1 comportant un premier moyen de transport dont la structure porteuse est équipée d'un premier et second châssis réunis par des poutres (3) caractérisé en ce que le second châssis (5) ou châssis arrière est amovible et que les dites poutres sont équipées chacune en extrémitée arrière d'une béquille escamotable (24) dotée d'un organe de roulement (25) d'appui sur le sol.

4. Ensemble de transport selon la revendication 1 comportant un premier moyen de transport dont la structure porteuse est constituée par un premier châssis (4), par un second châssis (5) et par deux poutres (3) caractérisé en ce que les deux châssis (4) et (5) sont équipés tous deux d'un cadre métallique vertical, respectivement (8) et (13) constitués chacun par deux montants réunis par deux traverses et que les poutres (3) coopèrent chacune par leur extrémité en coulissement latéral avec les traverses du cadre du premier et second châssis.

5. Ensemble de transport selon la revendication 4 caractérisé en ce que chaque poutre (4) à chaque extrémité comporte deux fourreaux (17) parallèles, superposés, perpendiculaires à l'axe longitudinal de la dite poutre qui sont chacun engagés en coulissement sur la traverse correspondante.

6. Ensemble de transport selon la revendication 1 et la revendication 5 comportant un premier moyen de transport dont la structure est équipée d'organes moteurs (7) caractérisé en ce que les organes moteurs sont constitués chacun par un vérin hydraulique et que chaque vérin hydraulique est fixé par sa tige à un des fourreaux (17) et par son corps à la traverse correspondante.

7. Ensemble de transport selon la revendication 3 équipé d'un premier moyen de transport dont la structure porteuse est dotée d'un second châssis (5) amovible caractérisé en ce que les fourreaux (17) qui coopèrent avec les traverses du cadre du châssis arrière reçoivent chacun en fixation un manchon horizontal (25) parallèle à l'axe d'avancement du transporteur et que chaque poutre en extrémité arrière est équipée de deux broches (26) horizontales destinées chacune à s'engager et à se verrouiller dans le manchon correspondant.

8. Ensemble de transport selon la revendication 1 comportant un premier moyen de transport dotée d'une structure porteuse constituée notamment par deux poutres (3) dotées chacune d'organes (6) de support de la maison caractérisé en ce que les dits organes sont constitués chacun par une broche horizontale, perpendiculaire à la poutre, encastrée dans cette dernière et s'étendant vers l'autre poutre.

9. Ensemble de transport selon la revendication 8 caractérisé en ce que les organes de support (6) sont fixés en partie inférieure des poutres (3) de manière à porter la maison au plus prés du sol.

10. Maison préfabriquée transportable par les moyens de transport selon les revendications 1 à revendication 9 caractérisée en ce que la dalle de la dite maison est équipée d'orifices horizontaux (22) dans chacun desquels s'engage une broche (6).

11. Maison préfabriquée selon la revendication 10 caractérisée par des éléments tubulaires métalliques (23) noyés dans la chape affleurant une des faces latérales de cette dernière dans chacun desquels s'engage une broche (6).

12. Procédé de fabrication de bâtiments de petites dimensions à partir de composants préfabriqués caractérisé en ce qu'il consiste :
- à ériger des panneaux préfabriqués constituant les murs extérieurs du bâtiment et à assembler ces différents panneaux les uns aux autres,
- à couler dans l'espace délimité par les panneaux une dalle en béton,
- à fixer aux panneaux constituant les murs extérieurs, des seconds panneaux constituant les cloisons internes et à poser la toiture.

13. Procédé selon la revendication 12 caractérisé en ce qu'il consiste à apposer un fluide visqueux sur l'aire D sur laquelle est coulée la dalle (35).

14. Composants préfabriqués de panneau pour la mise en oeuvre du procédé selon les revendications 12 et 13, caractérisé en ce que chaque panneau préfabriqué (33) est doté en partie inférieure d'au moins un orifice transversal (22) dans lequel est engagé l'extrémité d'un élément tubulaire (23) métallique mis en place avant coulage de la dalle, le dit élément coopérant par la suite avec un moyen de levage.

15. Composant de panneau selon la revendication 14 caractérisé en ce que le ou les orifices (22) d'un panneau 1 sont axialement alignés avec les orifices du panneau (1) opposé et que les orifices (22) disposés suivant un même axe reçoivent l'extrémité d'un même élément tubulaire (23).

16. Composant préfabriqué de panneau pour la mise en oeuvre du procédé selon les revendications 12 et 13 caractérisé en ce que chaque panneau (33) comporte des organes d'assemblage ou de blocage (38) à un panneau contigu, les dits organes étant fixés sur la face interne du dit panneau au plus près de ses rives verticales.

17. Composant préfabriqué de panneau selon la revendication 16 caractérisé en ce que les organes d'assemblage sont constitués par des platines métalliques rectangulaires disposées sur la face intérieure du panneau de manière à ce qu'un des bords verticaux de la dite platine vienne au niveau de la rive du panneau.

18. Composant de panneau préfabriqué pour la mise en oeuvre du procédé selon les revendications 12 et 13 caractérisé en ce que chaque panneau est doté en extrémité supérieure contre sa face intérieure d'un ou plusieurs sabots d'ancrage (41) des poutres (42) horizontales de la charpente.

19. Composant de toiture (4) pour la mise en oeuvre du procédé selon les revendications 12 et 13 caractérisé en ce que la dite toiture (47) préfabriquée du bâtiment comporte un cadre métallique horizontal (48) qui vient en appui sur la rive supérieure horizontale des murs extérieurs du bâtiment et recouvrir cette dernière, le dit cadre étant constitué à partir d'un profilé métallique comportant une aile horizontale (49) d'appui sur la rive supérieure horizontale du mur extérieur et au moins une aile verticale (50) en saillie vers le bas venant se disposer soit à l'intérieur, soit à l'extérieur du bâtiment.

20. Composant de toiture selon la revendication 19 caractérisé en ce que le cadre est constitué à partir d'un profilé de section droite en forme de "U" tourné vers le bas en sorte que lors du montage. les profilés du cadre viennent chevaucher la rive supérieure des panneaux.

21. Organe de levage selon la revendication 14 caractérisé en ce qu'il est constitué par un vérin hydraulique dont la tige (57) est doté d'une platine (58) d'appui au sol et dont le corps, en extrémité inférieure est équipé d'un doigt radial (56) destinée à être engagée dans l'un des orifices (22).

22. Bâtiment préfabriqué caractérisé en ce qu'il est doté de composants selon les revendications 14 à 20.

FIGURE 1

FIGURE 2

FIGURE 3

FIGURE 4

0 286 764

FIGURE 5

FIGURE 7

FIGURE 6

FIGURE 8

9

10

11

12

17

FIGURE 9

0 286 764

FIGURE 10

0 286 764

FIGURE 11

FIGURE 12

36          36

FIGURE 14

FIGURE 13

38

38

33

33

FIGURE 15

33

33

22

22

23

FIGURE 16

59    60

55    36

56

58    57

FIGURE 19

46  45    42

43

33

41  44

FIGURE 17

45

FIGURE 18

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US - A - 3 330 574 (KULYK)<br><br>* Colonne 4, lignes 8-41; figures 1-3 *<br>-- | 1,4-6 | B 62 D 53/06<br>B 62 D 55/06<br>E 04 B 1/343 |
| A | US - A - 2 463 647 (SCHUETTE)<br><br>* Colonne 3, ligne 24 - colonne 4, ligne 5; figure 1 *<br>-- | 1 | |
| A | US - A - 3 450 283 (HELLAND)<br><br>* Figures 1,2 *<br>-- | 3 | |
| A | US - A - 2 788 145 (CLARK)<br><br>* Colonne 3, lignes 59-75; figures 8,9 *<br>-- | 1 | |
| A | FR - A - 2 583 083 (MEREU et al.)<br><br>* Abrégé *<br><br>-------------------- | 1 | **DOMAINES TECHNIQUES RECHERCHES (Int. Cl.4)**<br><br>B 62 D 53/00<br>E 04 B 1/00 |

XXXXXXXXXXXXXXXXXXXXXXXXXXXXXXXXXXXXXXXXXX

| Lieu de la recherche | Date d'achèvement de la recherche | Examinateur |
|---|---|---|
| BERLIN | 30-11-1987 | KRIEGER |

Office européen
des brevets

## REVENDICATIONS DONNANT LIEU AU PAIEMENT DE TAXES

La présente demande de brevet européen comportait lors de son dépôt plus de dix revendications.

☐ Toutes les taxes de revendication ayant été acquittées dans les délais prescrits, le présent rapport de recherche européenne a été établi pour toutes les revendications.

☐ Une partie seulement des taxes de revendication ayant été acquittée dans les délais prescrits, le présent rapport de recherche européenne a été établi pour les dix premières revendications ainsi que pour celles pour lesquelles les taxes de revendication ont été acquittées.

à savoir les revendications:

☐ Aucune taxe de revendication n'ayant été acquittée dans les délais prescrits, le présent rapport de recherche européenne a été établi pour les dix premières revendications.

## X | ABSENCE D'UNITE D'INVENTION

La division de la recherche estime que la présente demande de brevet européen ne satisfait pas à l'exigence relative à l'unité d'invention et concerne plusieurs inventions ou pluralités d'inventions,

à savoir:

1. Revendications 1,3,9: Semi-remorque pour le transport de maisons préfabriquées

2. Revendication 2: Chenillette pour le transport de maisons préfabriquées

3. Revendications 10-22: Procédé de construction de maisons préfabriquées

☐ Toutes les nouvelles taxes de recherche ayant été acquittées dans les délais impartis, le présent rapport de recherche européenne a été établi pour toutes les revendications.

☐ Une partie seulement des nouvelles taxes de recherche ayant été acquittée dans les délais impartis, le présent rapport de recherche européenne a été établi pour les parties de la demande de brevet européen qui se rapportent aux inventions pour lesquelles les taxes de recherche ont été acquittées

à savoir les revendications:

☒ Aucune nouvelle taxe de recherche n'ayant été acquittée dans les délais impartis, le présent rapport de recherche européenne a été établi pour les parties de la demande de brevet européen qui se rapportent à l'invention mentionnée en premier lieu dans les revendications,

à savoir les revendications:    1,3,9